# EUROPEAN PATENT APPLICATION

(11) **EP 3 229 053 A1**
(43) Date of publication of application: **11.10.2017**
(21) Application number: 15865914.4
(22) Date of filing: 30.11.2015
(51) Int. Cl.: G02B 6/42, G02B 6/26

(54) **OPTICAL MODULE**

(30) Priority: 01.12.2014 JP 2014243220
(71) Applicant: Furukawa Electric Co. Ltd., Tokyo 100-8322 (JP)
(72) Inventor: IZAWA, Atsushi, Chiyoda-ku, Tokyo 100-8322 (JP)
(74) Representative: Leinweber & Zimmermann
(86) International application number: PCT/JP2015/005941
(87) International publication number: WO 2016/088349

(57) **Abstract**

An optical module includes a first module having a first end surface provided with a first guide hole and a second end surface opposite the first end surface, wherein the first module includes first optical fibers each provided penetrating the first module from the first end surface to the second end surface and having an axial center aligned based on a positional relationship to the first guide hole, and a first optical element having an axial center aligned based on a positional relationship to the first guide hole.

## Description

### TECHNICAL FIELD

The present invention relates to an optical module for use in an optical communication system.

### BACKGROUND ART

Optical communication systems use a light transmitter module, which is a modularized function to convert electric signals into optical signals, a light receiver module, which is a modularized function to convert optical signals into electric signals, or an optical transceiver module having both of these two modules. A representative example of an optical transceiver module used in a data center or the like is a four-channel optical transceiver complying with the QSFP (Quad Small Form-factor Pluggable) standards (such an optical transceiver is called a QSFP optical transceiver).

A typical QSFP optical transceiver includes an optical transmitter device, an optical receiver device, a pluggable electrical interface, and an optical interface such as an MPO (Multi-fiber Push On) connector. The optical transmitter device includes a light emitting element such as a VCSEL (Vertical Cavity Surface Emitting Laser), a driver IC for driving the light emitting element, and the like. The optical receiver device includes a light receiving element such as a photodiode, a receiver IC for driving the light receiving element, and the like.

Optical transceiver modules proposed heretofore are described in, for example, Patent Documents 1 to 3. Patent Document 1 describes a photoelectric converter module reduced in size by having chip components, such as a light emitting element, a driver IC, a light receiving element, and a receiver IC, mounted directly onto the surface of a single board. Patent Document 2 describes an optical interconnection module reduced in electrical and optical crosstalk by having a set of a light emitting element array and a driver circuit therefor and a set of a light receiving element and a signal amplification circuit mounted on the surfaces of portions of a board at different heights. Patent Document 3 describes an optical transceiver having an optical transmitter assembly and an optical receiver assembly mounted on a single board and connected to an optical connector with fiber ribbons.

### PRIOR ART REFERENCES

### PATENT DOCUMENT

Patent Document 1: Japanese Patent No. 4805738
Patent Document 2: Japanese Patent Application Laid-Open No. 2012-013726
Patent Document 3: Japanese Patent No. 4706611

### DISCLOSURE OF INVENTION

### PROBLEMS TO BE SOLVED BY THE INVENTION

However, the photoelectric converter module described in Patent Document 1 requires high mounting accuracy because the light emitting element and the light receiving element need to be optically coupled to a transmission waveguide portion and a reception waveguide portion of a single waveguide array, respectively. Mounting the light emitting element and the light receiving element closely to each other achieves size reduction, but is likely to generate noise due to crosstalk between the devices. In addition, an optical transceiver fails an in-process test if there is a defect in only one of the transmitter part and the receiver part. Thus, if a member which is unrepairable after assembly fails the test, the entire module is wasted.

The optical interconnection module described in Patent Document 2 can reduce electrical and optical crosstalk, but faces the same problems as Patent Document 1, with regard to the mounting accuracy and repairing issues. In addition, use of the stepped board increases the overall thickness of the module, hindering size reduction in the thickness direction. Moreover, the stepped board is expensive, which inevitably increases cost.

In the optical transceiver described in Patent Document 3, the optical transmitter assembly and the optical receiver assembly are mounted on a single board, arranged one after the other in the optical axis direction, and fiber ribbons and connectors for jumpers are attached to both of the optical transmitter assembly and the optical receiver assembly, respectively. Thus, the optical transceiver of Patent Document 3 needs the extra components and space for mounting the fiber ribbons and the connectors, which is disadvantageous in terms of size reduction. Since the ribbon fiber for the jumper attached to the rear assembly runs above the front assembly, it is difficult to reduce the size of the optical transceiver in the thickness direction. Moreover, if bending stress is applied to the fibers, the properties of the fibers may change with time, degrading the optical coupling performance.

An object of the present invention is to provide a small optical module which is easily assembled and easily optically coupled to an optical fiber array.

### MEANS FOR SOLVING THE PROBLEMS

According to one aspect of the present invention, there is provided an optical module including a first module having a first end surface provided with a first guide hole and a second end surface opposite the first end surface, wherein the first module includes first optical fibers each provided penetrating the first module from the first end surface to the second end surface and having an axial center aligned based on a positional relationship to the first guide hole, and a first optical element having an axial center aligned based on a positional relationship to the first guide hole.

### EFFECT OF THE INVENTION

According to the present invention, a small optical module which is easily assembled and easily optically coupled to an optical fiber array can be provided.

### BRIEF DESCRIPTION OF DRAWINGS

[FIG. 1] Fig. 1 is a top view illustrating the structure of an optical module according to a first embodiment of the present invention.
[FIG. 2A] Fig. 2A is a perspective view illustrating the structure of the optical module according to the first embodiment of the present invention.
[FIG. 2B] Fig. 2B is a perspective view illustrating the structure of the optical module according to the first embodiment of the present invention.
[FIG. 3] Fig. 3 is a top view illustrating the optical module according to the first embodiment of the present invention to which an optical fiber array is being connected.
[FIG. 4A] Fig. 4A is a schematic cross-sectional view illustrating the structure of and a method of manufacturing the optical module according to the first embodiment of the present invention.
[FIG. 4B] Fig. 4B is a schematic cross-sectional view illustrating the structure of and a method of manufacturing the optical module according to the first embodiment of the present invention.
[FIG. 5] Fig. 5 is a top view illustrating the structure of an optical module according to a second embodiment of the present invention.
[FIG. 6] Fig. 6 is a top view illustrating the structure of an optical module according to a third embodiment of the present invention.

### DESCRIPTION OF EMBODIMENTS

### [First Embodiment]

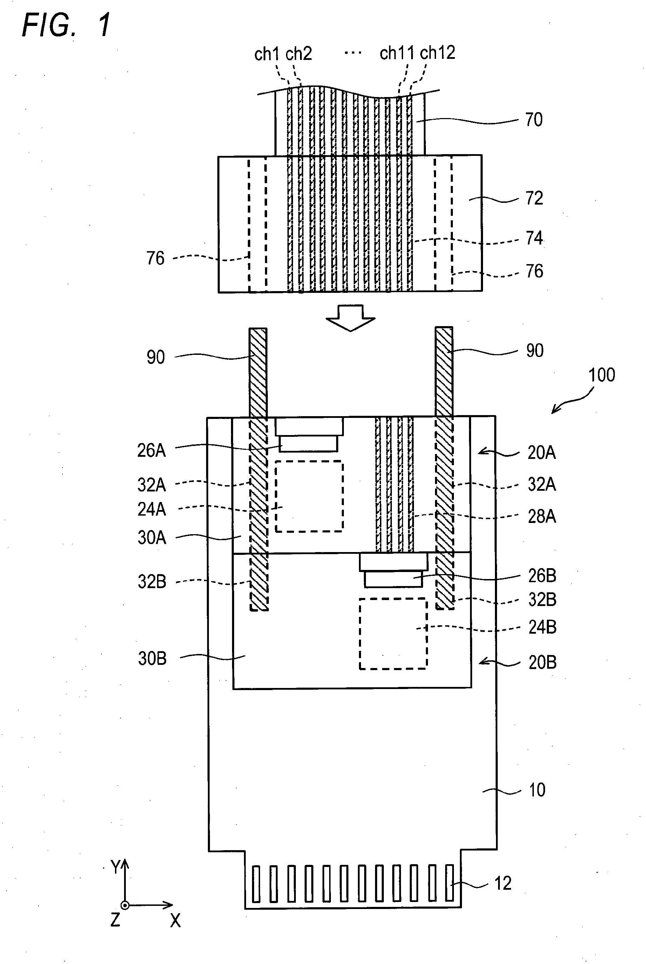

An optical module and a method of manufacturing the same according to a first embodiment of the present invention will be described with reference to Figs. 1 to 4B.

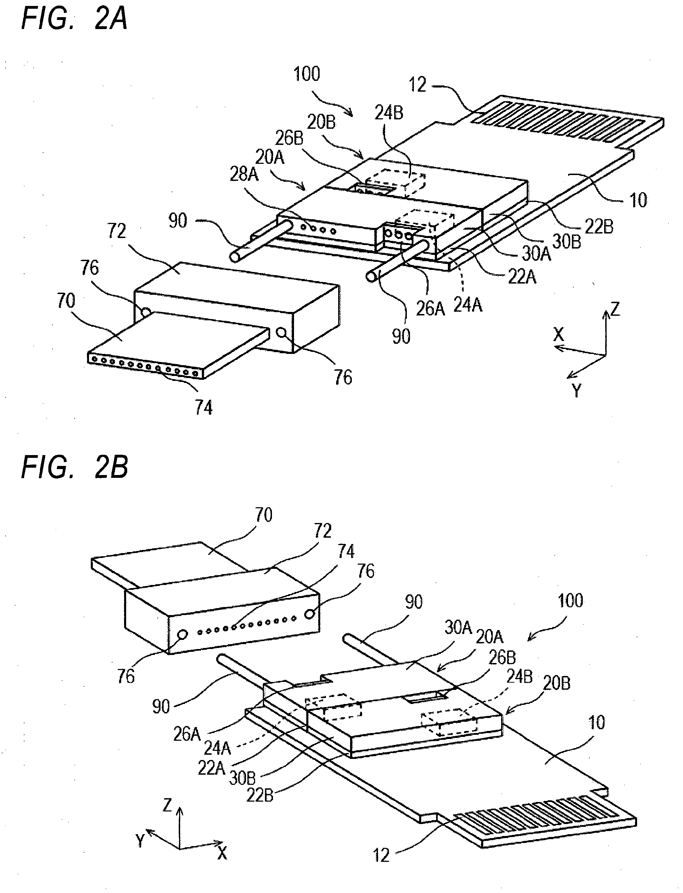

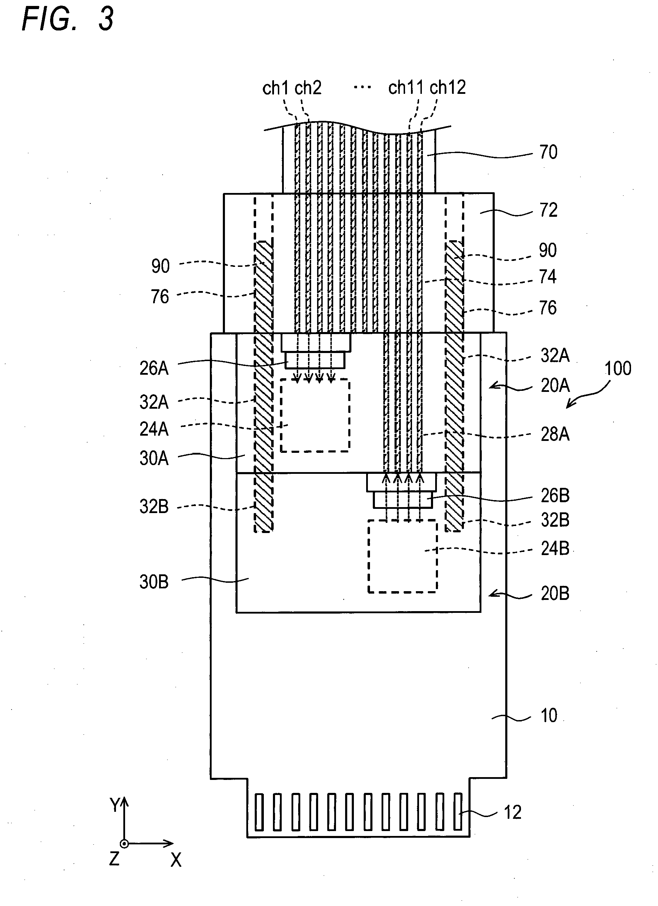

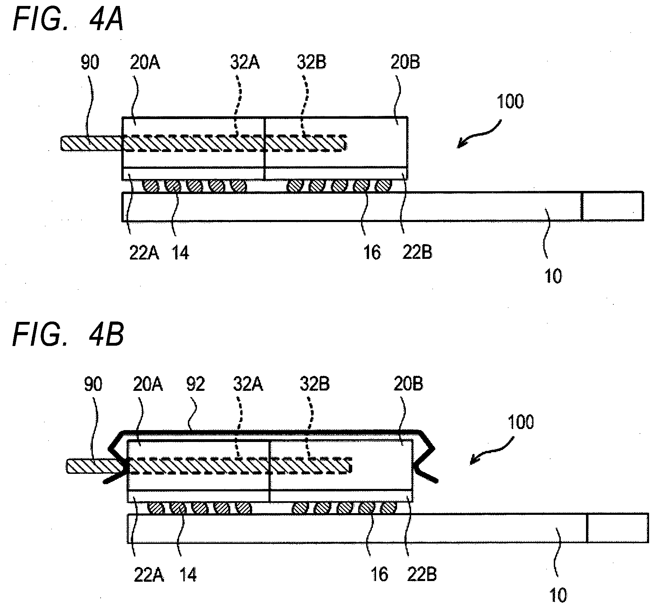

Fig. 1 is a top view illustrating the structure of an optical module according to the present embodiment. Figs. 2A and 2B are perspective views illustrating the structure of the optical module according to the present embodiment. Fig. 3 is a top view illustrating the optical module according to the present embodiment to which an optical fiber array is being connected. Figs. 4A and 4B are schematic cross-sectional views illustrating the structure of and a method of manufacturing the optical module according to the present embodiment.

First, a description is given of the structure of the optical module according to the present embodiment using Figs. 1 to 3. In the perspective views of Figs. 2A and 2B, the optical module according to the present embodiment is illustrated from two different angles, respectively.

As illustrated in Figs. 1, 2A, and 2B, an optical module 100 according to the present embodiment includes a main circuit board 10 and two modules mounted on the main circuit board 10, namely, a first module 20A and a second module 20B.

The main circuit board 10 includes a plurality of connection terminals 12 used for input and output of electrical signals, and interconnections (not illustrated) laid for electrically connecting the connection terminals with the first module 20A and the second module 20B. Components other than the first module 20A and the second module 20B may be additionally mounted on the main circuit board 10.

The first module 20A includes a printed circuit board 22A, an optical element unit 24A provided on the printed circuit board 22A, and a microlens array 26A placed near the optical element unit 24A. The optical element unit 24A and the microlens array 26A are incorporated in a resin package 30A formed on the printed circuit board 22A.

The resin package 30A is provided with two guide holes 32A bored in a direction from the side surface of the resin package 30A close to the position where the microlens array 26A is placed (a front end surface), toward an end portion opposite the side surface (a rear end surface). The guide holes 32A may penetrate the resin package 30A, or guide holes 32A not deep enough to penetrate the resin package 30A may be formed on both of the side surfaces, namely, the front end surface and the rear end surface. In the example illustrated, each guide hole 32A may be considered to be formed by a guide hole provided on the front end surface side and a guide hole provided on the rear end surface side communicating with each other.

Optical fibers 28A are incorporated in the resin package 30A, penetrating the resin package 30A from the side surface close to the microlens array 26A (the front end surface) to the side surface opposite the aforementioned side surface (the rear end surface). In one example, the optical fibers 28A extend parallel to the guide holes 32A.

Similarly, the second module 20B includes a printed circuit board 22B, an optical element unit 24B provided on the printed circuit board 22B, and a microlens array 26B placed near the optical element unit 24B. The optical element unit 24B and the microlens array 26B are incorporated in a resin package 30B formed on the printed circuit board 22B.

The resin package 30B is provided with two guide holes 32B extending from the side surface of the resin package 30B close to the position where the microlens array 26B is placed (a front end surface), toward an end portion opposite the side surface (a rear end surface). The guide holes 32B may penetrate the resin package 30B, or not be deep enough to penetrate the resin package 30B. The guide holes 32B not deep enough to penetrate the resin package 30B may be formed on both of the side surfaces, namely, the front end surface and the rear end surface.

The optical element units 24A, 24B are configured with either a light receiving unit including a light receiving element or a light emitting unit including a light emitting element. One of the optical element portions 24A, 24B may be a light receiving unit and the other one may be a light emitting unit, both of them may be a light receiving unit, or both of them may be a light emitting unit.

If the optical element unit 24A, 24B is a light receiving unit, the light receiving unit typically includes a light receiving element and a receiver IC that processes signals from the light receiving element. If the optical element unit 24A, 24B forms a four-channel optical receiver module, a four-channel PD (photodiode) array may for example be employed as the light receiving element. The four-channel PD array has a function to convert optical signals into electric signals. A TIA (Trans-Impedance Amplifier) array IC may for example be employed as the receiver IC. The TIA array IC has a function to increase the reception sensitivity through signal amplification and waveform shaping. The microlens array 26A, 26B is aligned and fixed at a position where incident light can be efficiently focused onto the light receiving portion of the four-channel PD array by using active alignment.

If the optical element unit 24A, 24B is a light emitting unit, the light emitting unit typically includes a light emitting element and a driver IC that drives the light emitting element. If the optical element unit 24A, 24B forms a four-channel optical receiver module, a four-channel VCSEL (Vertical Cavity Surface Emitting Laser) array may for example be employed as the light emitting element. A VCSEL driver array IC may for example be employed as the driver IC. The microlens array 26A, 26B is aligned and fixed at a position where light emitted by the light emitting element can be efficiently focused onto a desired position by using active alignment.

The size and interval of the two guide holes 32A provided in the resin package 30A are equal to those of the two guide holes 32B provided in the resin package 30B.

The first module 20A and the second module 20B are adjacently arranged on the main circuit board 10 in such a manner that the rear end surface of the first module 20A is in contact with the front end surface of the second module 20B. Their positional relationship is described using the coordinate system illustrated in the drawings. The first module 20A and the second module 20B are mounted on the surface of the main circuit board 10 parallel to the X-Y plane in such a manner that the guide holes 32A, 32B extend parallel to the Y direction. Guide pins 90 are fittingly inserted into guide holes each of which is formed by one of the guide holes 32A of the first module 20A and a corresponding one of the guide holes 32B of the second module 20B communicating with each other. In other words, the first module 20A and the second module 20B are arranged at positions where the guide holes 32A and the guide holes 32B are aligned in straight lines by the guide pins 90. One end portion of each guide pin 90 (the upper side in Fig. 1) protrudes from the front end surface of the first module 20A. As will be described later, this protruding portion is provided to facilitate positioning of the first module 20A and an MT connector 72 when they are connected to each other. Each of the guide pins 90 connecting the first module 20A and the second module 20B together and a corresponding one of the guide pins 90 connecting the first module 20A and the MT connector 72 together may be a single continuous guide pin or separate guide pins. In a case of separate guide pins, the guide pins 90 connecting the first module 20A and the MT connector 72 together may be provided to the first module 20A in a protruding manner or may be provided to the MT connector 72.

The end portion of the first module 20A on the front end surface side forms a light input/output part of the optical module 100 according to the present embodiment. As illustrated in Fig. 1 for example, a component such as the MT (Mechanical Transfer) connector 72 having an optical fiber array 70 is optically coupled to the light input/output part.

The interval and size of the two guide pins 90 protruding from the front end surface of the first module 20A coincide with the interval and size of guide holes 76 provided to the MT connector 72, so that the guide pins 90 may be fitted in the guide holes 76 of the MT connector 72. Alternatively, the interval and size of the two guide pins 90 provided to the MT connector 72 coincide with the interval and size of the guide holes 32A provided to the front end surface of the first module 20A, so that the guide pins 90 may be fitted in the guide holes 32A of the first module 20A. When the guide pins 90 are fitted into the guide holes 76 or the guide holes 32A, the MT connector 72 is connected to the optical module 100 and thus set in position in a self-aligning manner, allowing optical fibers 74 of the optical fiber array 70 to be optically coupled to the first module 20A.

In the optical module 100 according to the present embodiment, positioning, or axial alignment, of the optical element unit 24A, the microlens array 26A, and the optical fibers 28A is performed based on the positions of the guide holes 32A, in order to allow the optical fibers 74 of the optical fiber array 70 to be optically coupled to the first module 20A. Determining the positions of the optical element unit 24A, the microlens array 26A, and the optical fibers 28A based on the positions of the guide holes 32A determines, in turn, the positions of the optical element unit 24A, the microlens array 26A, and the optical fibers 28A relative to the MT connector 72 set in position by the guide pins 90 fittingly inserted into the guide holes 32A and, in turn, relative to the optical fibers 74 of the optical fiber array 70.

Thus, the positions of the optical element unit 24A, the microlens array 26A, and the optical fibers 28A relative to the guide holes 32A are determined based on the positional relationships between the guide holes 76 and the optical fibers 74 of the MT connector 72, so that the optical element unit 24A and the optical fibers 28A can be optically coupled to the optical fibers 74.

How the first module 20A and the second module 20B are connected together is similar to how the first module 20A and the MT connector 72 are connected together. Specifically, positioning, or axial alignment, of the optical element unit 24B and the microlens array 26B is performed based on the positions of the guide holes 32B, in order to allow the optical fibers 28A of the first module 20A to be optically coupled to the second module 20B. Determining the positions of the optical element unit 24B and the microlens array 26B based on the positions of the guide holes 32B determines, in turn, the positions of the optical element unit 24B and the microlens array 26B relative to the first module 20A and the optical fiber array 70 set in position by the guide pins 90.

Thus, the positions of the optical element unit 24B and the microlens array 26B relative to the guide holes 32B are determined based on the positional relationships between the guide holes 32A and the optical fibers 28A of the first module 20A, so that the optical element unit 24B can be optically coupled to the optical fibers 28A.

The first module 20A and the second module 20B of the optical module 100 according to the present embodiment can be considered as having the function of the MT connector at the front end surface and/or the rear end surface of the module.

Fig. 3 illustrates the optical module 100 according to the present embodiment to which the MT connector 72 having the optical fiber array 70 is being connected. In the example assumed here, the optical fiber array 70 is a 12-channel fiber array, the first module 20A is a four-channel optical receiver module, and the second module 20B is a four-channel optical transmitter module (i.e., the optical module 100 is an optical transceiver module). Specifically, the optical element unit 24A of the first module 20A is a four-channel light receiving unit, and the optical element unit 24B of the second module 20B is a four-channel light emitting unit. With the optical fibers 74 in Fig. 3 being denoted as a ch1 fiber, a ch2 fiber, ..., a ch11 fiber, and a ch12 fiber from the left, the ch1 to ch4 optical fibers 74 are used for optical reception, and the ch9 to ch12 optical fibers 74 are used for optical transmission.

When the guide pins 90 are fitted in the guide holes 76 to connect the MT connector 72 to the optical module 100, an end portion of each optical fiber 74 of the optical fiber array 70 faces a predetermined place on the front end surface of the first module 20A, depending on the positional relationships between the optical fiber 74 and the guide pins 90. To be more specific, the positions of the microlens array 26A and the optical element 24A of the first module 20A relative to the guide holes 32A are determined so that the channels of the optical element unit 24A may be optically coupled to the ch1 to ch4 optical fibers 74, respectively. The positions of the four optical fibers 28A relative to the guide holes 32A are determined so that the optical fibers 28A may be optically coupled to the ch9 to ch12 optical fibers 74, respectively. The positions of the optical element unit 24B and the microlens array 26B of the second module 20B relative to the guide holes 32B are determined so that the channels of the optical element unit 24B may be optically coupled to the four optical fibers 28A.

With such a structure, the microlens array 26A can efficiently focus light emitted from the ch1 to ch4 fibers of the optical fiber array 70 onto the optical element unit 24A serving as a light receiving unit. In addition, the microlens array 26B can efficiently focus light emitted from the optical element unit 24B serving as a light emitting unit onto the optical fibers 28A so that the light can enter the ch9 to ch12 fibers of the optical fiber array 70 efficiently.

In the optical module 100 according to the present embodiment, both of the first module 20A and the second module 20B can be optically connected to the common optical fiber array 70. Thus, a jumper fiber does not need to be attached to the second module 20A or the second module 20B. Since the jumper cables are unneeded, component cost can be reduced. Since the space for mounting an optical connector for the jumper cable is also unneeded, size reduction can be achieved. Further, since the optical transmitter device and the optical receiver device are separated as modules and arranged not to be close to each other, crosstalk can be reduced.

Next, a method of manufacturing the optical module according to the present embodiment will be described using Figs. 4A and 4B.

The first module 20A is formed as follows. The components of the optical element unit 24A, such as an optical element and an IC, are mounted on the printed circuit board 22A. Then, the resin package 30A, which is a resin compact in which the microlens array 26A and the optical fibers 28A are incorporated, is attached onto the printed circuit board 22A by active alignment. The resin package 30A is provided with the guide holes 32A in advance.

Similarly, the second module 20B is formed as follows. The components of the optical element unit 24B, such as an optical element and an IC, are mounted on the printed circuit board 22B. Then, the resin package 30B, which is a resin compact in which the microlens array 26B is incorporated, is attached onto the printed circuit board 22B by active alignment. The resin package 30B is provided with the guide holes 32B in advance.

The first module 20A and the second module 20B can be manufactured and tested independently. Thus, a defect in the first module 20A or the second module 20B found after the assembly of the optical module 100 does not result in a defect in the entire module. The alignment step for the first module 20A and the alignment step for the second module 20B are completely separate from each other. Thus, a highly-precise mounting facility is not necessary for the mounting of the light emitting element and the light receiving element.

The first module 20A and the second module 20B thus formed are mounted on the main circuit board 10 together, with the guide pins 90 fittingly inserted in the guide holes 32A, 32B. The first module 20A and the second module 20B are, for example, LGA (Land Grid Array) packages, and mounted by reflow-soldering of electrode terminals on the back surface of the circuit boards 22A, 22B to electrode terminals on the main circuit board 10. Since the guide pins 90 are inserted in advance, the position of the second module 20B relative to the first module 20A is fixed in terms of the X-axis direction and the Z-axis direction, so that their optical axes can be prevented from being misaligned in the X-axis direction and the Z-axis direction.

In regard to the above mounting step, it is desirable that, as illustrated in Fig. 4A for example, the interval between a group of the electrodes on the main circuit board 10 for connecting the printed circuit board 22A to the main circuit board 10 and a group of the electrodes on the main circuit board 10 for connecting the printed circuit board 22B to the main circuit board 10 be smaller than the interval between a group of the electrodes on the printed circuit board 22A and a group of the electrodes on the printed circuit board 22B. Thereby, the surface tension of solder bumps 14 connecting the first module 20A to the main circuit board 10 and the surface tension of solder bumps 16 connecting the second module 20B to the main circuit board 10 produce force acting in a direction that brings the first module 20A and the second module 20B toward each other. In other words, the self-alignment effect by the reflow produces force to make the first module 20 and the second module 30 push each other, preventing misalignment of their optical axes in the Y-axis direction, as well.

Alternatively, as illustrated in Fig. 4B for example, the first module 20A and the second module 20B may be mounted on the main circuit board 10 with a clip 92 attached to fix the first module 20A and the second module 20B closely to each other. The misalignment of the optical axes in the Y-axis direction can be prevented by such a method as well. The fixation using the clip 92 may be used in combination with the method in Fig. 4A.

According to the present embodiment, a module containing an optical element and optical fibers is formed, with the optical element and the optical fibers having their axial centers aligned based on their positional relationships to the guide holes. When such modules are connected in a multi-staged manner, their respective optical elements can be easily integrated in axial alignment with each other. A fiber tape and an optical connector are unneeded for the connection of the modules, which prevents the number of components and size from increasing. The modules can be individually manufactured and tested, which makes it less likely that the entire optical module is wasted.

### [Second Embodiment]

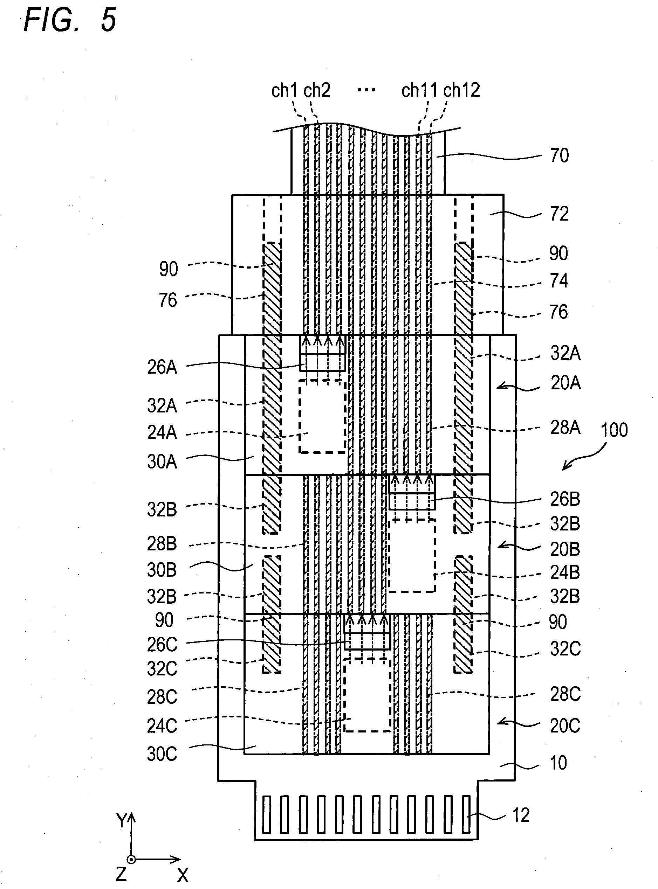

An optical module according to a second embodiment of the present invention will be described with reference to Fig. 5. The same components as those of the optical module of the first embodiment illustrated in Figs. 1 to 4B are denoted by the same reference numerals as those used in Figs. 1 to 4B, and descriptions for those components are either omitted or simplified.

Fig. 5 is a top view illustrating the structure of the optical module according to the present embodiment.

While the optical module 100 of the first embodiment includes the two modules 20A, 20B, the number of modules forming the optical module 100 is not limited to two and may be increased or decreased as necessary. Each module may be any one of an optical receiver module and an optical transmitter module, and any combination can be used as necessary. In the present embodiment, an example of such variations is described.

An optical module 100 according to the present embodiment includes, as illustrated in Fig. 5, the main circuit board 10 and three modules mounted on the main circuit board 10, namely, the first module 20A, the second module 20B, and a third module 20C. The first module 20A, the second module 20B, and the third module 20C are all a four-channel optical transmitter module. Specifically, the first module 20A includes the optical element unit 24A which is a four-channel light transmitting part, the microlens array 26A, eight optical fibers 28A, and the resin package 30A provided with the guide holes 32A. The second module 20B includes the optical element unit 24B which is a four-channel light emitting unit, the microlens array 26B, eight optical fibers 28B, and the resin package 30B provided with the guide holes 32B. The third module 20C includes an optical element unit 24C which is a four-channel light emitting unit, a microlens array 26C, eight optical fibers 28C, and a resin package 30C provided with guide holes 32C. The detailed configurations of these parts are the same as those in the first embodiment.

In the example in Fig. 5, the first module 20A has the optical element unit 24A at a position coinciding with the ch1 to ch4 fibers of the optical fiber array 70 and has the optical fibers 28A at positions coinciding with the ch5 to ch12 fibers of the optical fiber array 70. The second module 20B has the optical fibers 28B at positions coinciding with the ch1 to ch8 fibers of the optical fiber array 70 and has the optical element unit 24B at a position coinciding with the ch9 to ch12 fibers of the optical fiber array 70. The third module 20C has the optical fibers 28C at positions coinciding with the ch1 to ch4 fibers and the ch9 to ch12 fibers of the optical fiber array 70 and has the optical element unit 24C at a position coinciding with the ch5 to ch8 fibers of the optical fiber array 70.

An optical transmitter module having 12 ports can be formed when the first module 20A, the second module 20B, and the third module 20C are arranged in series. The first module 20A, the second module 20B, and the third module 20C may be used as three independent four-channel optical transmitter modules or a single 12-channel optical transmitter module. The order of the arrangement of the first module 20A, the second module 20B, and the third module 20C is not limited to what is illustrated in Fig. 5, and the first module 20A, the second module 20B, and the third module 20C may be switched in positions.

PC polishing may be performed on the end surfaces of the optical fibers to prevent reflection, the end surfaces being portions where the optical fibers are joined to each other by butt joint, namely, between the optical fibers 74 and the optical fibers 28A, between the optical fibers 28A and the optical fibers 28B, and between the optical fibers 28B and the optical fibers 28C. Alternatively, for reflection prevention, a refractive index matching material may be applied to only the fibers to be connected by butt joint.

According to the present embodiment, a module containing an optical element and optical fibers is formed, with the optical element and the optical fibers having their axial centers aligned based on their positional relationships to the guide holes. When such modules are connected in a multi-staged manner, their respective optical elements can be easily integrated in axial alignment with each other. A fiber tape and an optical connector are unneeded for the connection of the modules, which prevents the number of components and size from increasing. The modules can be individually manufactured and tested, which makes it less likely that the entire optical module is wasted.

### [Third Embodiment]

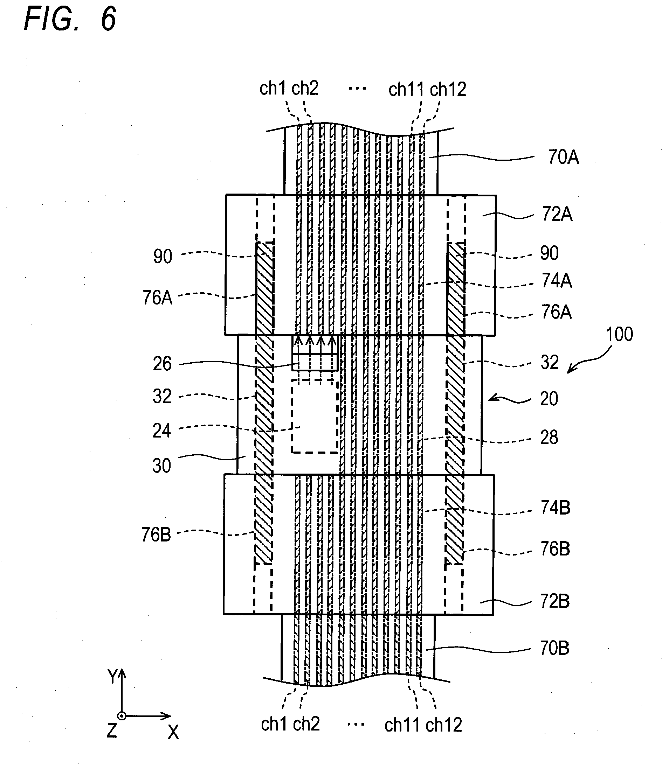

An optical module according to a third embodiment of the present invention will be described with reference to Fig. 6. The same components as those of the optical modules of the first and second embodiments illustrated in Figs. 1 to 5 are denoted by the same reference numerals as those used in Figs. 1 to 5, and descriptions for those components are either omitted or simplified.

Fig. 6 is a top view illustrating the structure of the optical module according to the present embodiment.

In an example described in the present embodiment, the optical module 100 is formed by a single module 20.

An optical module 100 according to the present embodiment has, as illustrated in Fig. 6, the module 20 including an optical element unit 24 which is a four-channel light emitting unit, a microlens array 26, eight optical fibers 28, and a resin package 30 provided with guide holes 32. The guide pins 90 are fittingly inserted into the respective guide holes 32 with end portions of the guide pins 90 protruding from the front end surface and the rear end surface of the module 20.

To the front end surface of the module 20 from which the guide pins 90 protrude, an optical fiber array 70A is optically coupled via an MT connector 72A provided with guide holes 76A in which the guide pins 90 are fitted. Similarly, to the rear end surface of the module 20 from which the guide pins 90 protrude, an optical fiber array 70B is optically coupled via an MT connector 72B provided with guide holes 76B in which the guide pins 90 are fitted. The guide pins 90 may alternatively be provided to the MT connectors 72A, 72B.

In the example in Fig. 6, the module 20 has the optical element unit 24 at a position coinciding with ch1 to ch4 fibers of the optical fiber array 70A and has the optical fibers 28 at positions coinciding with ch5 to ch12 fibers of each of the optical fiber arrays 70A, 70B. In other words, the ch5 to ch12 fibers of the optical fiber array 70A and the ch5 to ch12 fibers of the optical fiber array 70B are connected to each other via the optical fibers 28.

Of the channels of the optical module 100 having a multi-channel configuration, channels having neither the optical transmitter function nor the optical receiver function may be used to function simply as an optical relay connector. When the optical fiber arrays 70A, 70B are connected to the front end surface and the rear end surface of the optical module 100, respectively, optical signals from the ch5 to ch12 fibers pass through the module and are transmitted straight to another device or apparatus. Thus, unnecessary connection points of optical connectors can be eliminated to reduce the costs of the entire system.

According to the present embodiment, the optical module containing the optical element and the optical fibers can function also as an optical relay connector. Since the optical element and the optical fibers have their axial centers aligned based on their positional relationships to the guide holes, the optical fiber arrays can be easily optically coupled to the optical element and the optical fibers via the optical connectors.

### [Modified Embodiments]

The present invention is not limited to the above embodiments, and can be modified variously.

For instance, although the first module 20A is an optical receiver module and the second module 20B is an optical transmitter module in the first embodiment, the first module 20A may be an optical transmitter module and the second module 20B may be an optical receiver module.

Although the optical module 100 is formed by three optical transmitter modules in the second embodiment, the optical module 100 may be formed by three optical receiver modules. The optical module 100 may be formed by a combination of an optical transmitter module and an optical receiver module. The optical module 100 may be formed by four or more modules 20.

Although the optical fiber array 70 is connected to each of the front end surface and the rear end surface of the optical module 100 formed by a single module 20 in the third embodiment, the optical fiber array 70 may be connected to each of the front end surface and the rear end surface of the optical module 100 formed by two or more modules 20.

Although the interval between the guide holes 32 used for the connection between the module 20 and the MT connector 72 and the interval between the guide holes 32 used for the connection between the modules 20 are the same in the first and second embodiments, these intervals do not necessarily have to be the same. While the interval of the guide holes used for the connection between the module 20 and the MT connector 72 relies on the specifications of the MT connector 72, a different interval can be set for the guide holes 32 used for the connection between the modules 20. The same applies to the positions and number of the guide holds 32.

Although two guide pins 90 are used to connect the module 20 and the MT connector 72 to each other and to connect the modules 20 together in the first to third embodiments, three or more guide pins may be used for the connections.

Although the optical modules of the first to third embodiments are connected to the 12ch optical fiber array, the number of channels of the optical module may be increased or decreased as necessary.

According to the present invention, a module containing an optical element and optical fibers is formed, with the optical element and the optical fibers having their axial centers aligned based on their positional relationships to the guide holes. When such modules are connected in a multi-staged manner, their respective optical elements can be easily integrated in axial alignment with each other. A fiber tape and an optical connector are unneeded for the connection of the modules, which prevents the number of components and size from increasing. The modules can be individually manufactured and tested, which makes it less likely that the entire optical module is wasted.

The embodiments described above have been provided to give some examples of possible applications of the present invention, and are not intended to prevent alternations or modifications from being made without departing from the gist of the present invention.

### EXPLANATION OF REFERENCE NUMERALS

10 ... main circuit board
12 ... connection terminal
20, 20A, 20B, 20C ... module
22A, 22B ... printed circuit board
24, 24A, 24B, 24B ... optical element unit
26, 26A, 26B, 26C ... microlens array
28, 28A, 28B, 28C, 74, 74A, 74B ... optical fiber
30, 30A, 30B, 30C ... resin package
32, 32A, 32B, 32C, 76, 76A, 76B ... guide hole
70, 70A, 70B ... optical fiber array
72, 72A, 72B ... MT connector
90 ... guide pin
92 ... clip
100 ... optical module

## Claims

1. An optical module comprising:
a first module having a first end surface provided with a first guide hole and a second end surface opposite the first end surface, wherein
the first module includes
first optical fibers each provided penetrating the first module from the first end surface to the second end surface and having an axial center aligned based on a positional relationship to the first guide hole, and
a first optical element having an axial center aligned based on a positional relationship to the first guide hole.

2. The optical module according to claim 1, wherein
the first module further includes a first guide pin fittingly inserted into the first guide hole,
the first module is configured to be coupled to a first optical connector having a first optical fiber array when the first guide pin is fitted into a second guide hole in the first optical connector, and
the axial centers of the first optical fibers and the first optical element are aligned so that the first optical fibers and the first optical element are optically coupled to predetermined ones of optical fibers in the first optical fiber array when the first module is coupled to the first optical fiber array.

3. The optical module according to claim 1, wherein
the first module is configured to be coupled to a first fiber array of a first optical connector having the first fiber array and a first guide pin when the first guide pin is fitted into the first guide hole, and
the axial centers of the first optical fibers and the first optical element are aligned so that the first optical fibers and the first optical element are optically coupled to predetermined ones of optical fibers of the first optical fiber array when the first module is coupled to the first optical fiber array.

4. The optical module according to any one of claims 1 to 3, further comprising:
a second module including a second optical element and having a third end surface provided with a third guide hole and a fourth end surface opposite the third end surface, wherein
the first module further includes a fourth guide hole provided in the second end surface and a second guide pin fittingly inserted into the fourth guide hole,
the first module is configured to be coupled to the second module when the second guide pin is fitted into the third guide hole in the second module, and
the second optical element has an axial center aligned based on a positional relationship to the third guide hole so that the second optical element is optically coupled to the first optical fibers of the first module when the second module is coupled to the first module.

5. The optical module according to claim 4, wherein
one of the first optical element and the second optical element is a light emitting element, and the other is a light receiving element.

6. The optical module according to claim 4 or 5, wherein
the second module further includes second optical fibers provided penetrating the second module from the third end surface to the fourth end surface.

7. The optical module according to any one of claims 1 to 3, wherein
the first module further includes a fourth guide hole provided in the second surface and a second guide pin fittingly inserted into the fourth guide hole,
the first module is configured to be coupled to a second optical array of a second optical connector when the second guide pin is fitted into a fifth guide hole in the second optical connector, and
the axial centers of the first optical fibers are aligned so that the first optical fibers are optically coupled to predetermined ones of optical fibers of the second optical fiber array when the first module is coupled to the second optical fiber array.

8. The optical module according to any one of claims 1 to 3, wherein
the first module further includes a fourth guide hole provided in the second end surface,
the first module is configured to be coupled to a second optical fiber array of a second optical connector having the second optical fiber array and a second guide pin when the second guide pin is fitted into the fourth guide hole, and
the axial centers of the first optical fibers are aligned so that the first optical fibers are optically coupled to predetermined ones of optical fibers of the second optical fiber array when the first module is coupled to the second optical fiber array.

9. The optical module according to claim 4 or 7, wherein
the first guide hole and the fourth guide hole of the first module communicate with each other, and
a single continuous guide pin is fittingly inserted into the first guide hole and the fourth guide hole.
